(19) Europäisches Patentamt
European Patent Office
Office européen des brevets

(11) **EP 3 750 684 B1**

(12) **EUROPEAN PATENT SPECIFICATION**

(45) Date of publication and mention
of the grant of the patent:
**28.12.2022 Bulletin 2022/52**

(21) Application number: **20177198.7**

(22) Date of filing: **28.05.2020**

(51) International Patent Classification (IPC):
***B29C 51/04*** *(2006.01)*

(52) Cooperative Patent Classification (CPC):
**B29C 51/04;** B29C 2791/007; B29K 2871/00;
B29K 2877/00

(54) **PRE-STRETCHER WITH IMPROVED THERMAL MANAGEMENT**

VORSTRECKER MIT VERBESSERTER WÄRMEVERWALTUNG

PRÉ-ÉTIREUR PRÉSENTANT UNE MEILLEURE GESTION THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.06.2019 NL 2023319**

(43) Date of publication of application:
**16.12.2020 Bulletin 2020/51**

(73) Proprietor: **B.V. Holdingmaatschappij B.S.M.F.
5161 WR Sprang-Capelle (NL)**

(72) Inventor: **Bosch, Antonie
5161 WR Sprang-Capelle (NL)**

(74) Representative: **Arnold & Siedsma
Bezuidenhoutseweg 57
2594 AC The Hague (NL)**

(56) References cited:
WO-A2-2016/161187     DE-A1- 2 428 578
JP-A- 2001 205 694     US-A- 4 595 554

## Description

The present invention relates to a pre-stretcher and to a pre-stretcher system for a thermoforming device. The present invention further relates to a thermoforming device comprising the pre-stretcher or pre-stretcher system.

Thermoforming is a known technique. It relies on the fact that, with sufficient heating, the form of thermoplastic materials such as polypropylene (PP), polystyrene (PS), polyethylene (PET), or polylactic acid (PLA) can be changed. Hereinafter, the material to be formed using thermoforming will be referred to as polymeric material.

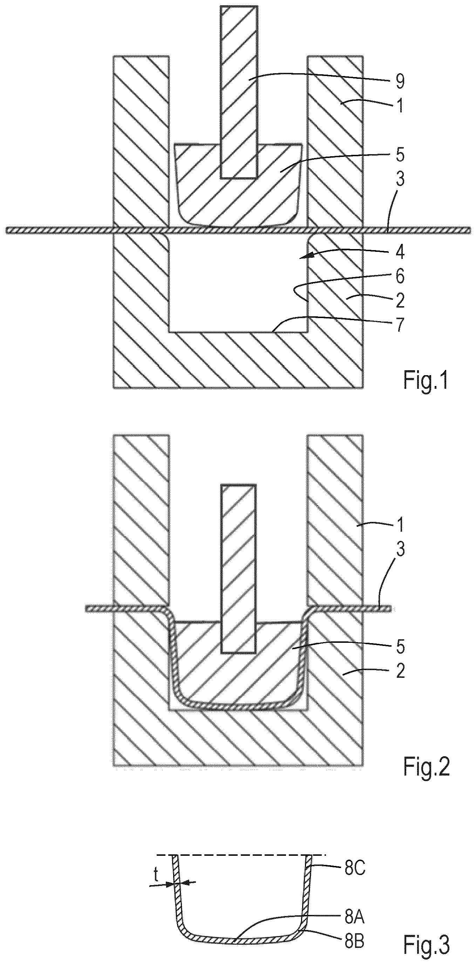

A typical thermoforming device, schematically shown in figure 1, comprises two molds, an upper mold 1 and a lower mold 2, in between which polymeric material 3, preferably in the form of a sheet or foil, can be arranged. Inside upper mold 1, a pre-stretcher is arranged 5 that can be moved relative to a remainder of upper mold 1. Pre-stretcher 5 typically has a conical shape, a box shape, a bar shape, or a trapezoidal prism shape, depending on the product to be formed.

When upper mold 1 and lower mold 2 are brought together, polymeric material 3 is pushed in mold cavities 4 of lower mold 2 by a pre-stretcher 5 that moves in a first direction relative to polymeric material 3. This situation is shown in figure 2. An increased pressure is applied to press polymeric material 3 against wall 6 and bottom 7 of mold cavity 4. Because wall 6 and bottom 7 of mold cavity 4 are kept at relatively low temperatures, polymeric material 3 will solidify and the final shape of the product will be defined.

In some cases, a pre-stretcher core is arranged in pre-stretcher 5 to enable connection thereof to a pre-stretcher rod 9, which in turn is mounted on a pre-stretcher plate that can be driven mechanically.

The combination of upper mold 1 and lower mold 2 usually comprises a plurality of mold cavities 4, and a corresponding plurality of pre-stretchers 5. A plurality of products can hereby be formed from one sheet or foil of polymeric material 3.

Typically, the known pre-stretcher comprises a body having a central axis parallel to the first direction, wherein the body is divided into an inner body part and an outer body part based on a position of those parts relative to the central axis. The inner body part is made at least partially from a first material or material composition having a first coefficient of thermal conductivity and a first coefficient of friction relative to the polymeric material.

An example of a product 8, after having been separated from a remainder of the foil of polymeric material 3, is shown in figure 3. Here, it is important to distinguish between bottom 8A, corners 8B, and walls 8C of the product. More in particular, the thickness t of these different parts of product 8 should be within well defined ranges. These thicknesses depend to a large extent on how much the polymeric material was stretched by the pre-stretcher. This in turn depends on the temperature of the polymeric material, the temperature of the pre-stretcher, the speed at which the pre-stretcher moves, and the coefficient of friction between the pre-stretcher and the polymeric material, during the pre-stretching.

The Applicant has found that known pre-stretchers do not allow sufficient control over the product thickness. As a result, the thickness of the product, either as a whole or locally, may not comply with the target thickness. In addition, it may prove difficult to reduce the product thickness as a whole, e.g. to save polymeric material, without risking that some part(s) of the product become(s) too thin.

A pre-stretcher according to the preamble of claim 1 is known from US 4 595 554A.

Further pre-stretchers in accordance with the preamble of claim 1 are disclosed in JP2001205694A and DE2428578A1.

It is an object of the present invention to provide a solution to these problems.

This object has been achieved using the pre-stretcher of claim 1. In this pre-stretcher, the outer body part is made at least partially from a second material or material composition having a second coefficient of thermal conductivity and a second coefficient of friction relative to the polymeric material being different from the first coefficient of thermal conductivity and/or the first coefficient of friction, respectively. Additionally or alternatively, the pre-stretcher comprises a fluid channel having an inlet channel part, an outlet channel part, and an intermediate channel part, wherein the inlet channel part and outlet channel part each extend, preferably for the most part, along the first direction, and wherein the intermediate channel part is arranged at least partially in the outer body part. The intermediate channel part preferably extends for the most part in a plane perpendicular to the first direction.

According to the invention, the first material and second material are syntactic foam, wherein the syntactic foam is composed of hollow microspheres and a binding agent for binding the hollow microspheres.

The Applicant has realized that product thickness can be controlled more efficiently if the region or regions of the pre-stretcher that is/are responsible for creating the corner regions of the product, or at least the region or regions connecting the bottom of the product and the side walls of the product, has/have different thermal and/or frictional properties than the other regions of the pre-stretcher. This allows a better control over the pre-stretching of the polymeric material. More in particular, the pre-stretching can be controlled locally.

According to the present invention, these different thermal and/or frictional properties are achieved by using different materials or material compositions in different parts of the pre-stretcher, the materials or material compositions differing in coefficient of thermal conductivity and/or coefficient of friction relative to the polymeric material. Additionally or alternatively, the pre-stretcher may be provided with a fluid channel for cooling or heating the pre-stretcher differently in different parts of the pre-stretcher. Here, cooling or heating can be achieved by generating a flow of a suitable fluid, such as pressurized gas or a suitable coolant, through the intermediate channel part of the fluid channel. According to the invention, the intermediate channel part is located, at least partially, in the outer body part.

Although the provision of different materials and the provision of a fluid channel can be applied separately, the present invention does not exclude embodiments in which they are applied together.

The inner body part can be entirely made of the first material or material composition. In this case, the outer body part may comprise a first region made of the first material or material composition and a second region made of the second material or material composition. Alternatively, the outer body part can be entirely made of the first material or material composition. In this case, the inner body part comprises a first region made of the first material or material composition and a second region made of the second material or material composition. The hollow microspheres can be hollow glass microspheres. The binding agent can be one or more out of the group consisting of polyether ether ketone 'PEEK', polyether ketone ketone 'PEKK', polyaryle ether ketones 'PEK, Polyamide 'PA', and polyetherimide 'PEI'. Other binding agents or other essentially hollow microspheres are not excluded.

In an embodiment, the first and second material can each be syntactic foam but have a different coefficient of thermal conductivity and/or friction due to the amount of microspheres, the size and/or thickness of the microspheres, and/or the type of binding agent used in the first and second material being different. In general, when the size of the microspheres is increased, the coefficient of friction between the pre-stretcher and the polymeric material will also increase. If the same binding agent is used, a more reliable connection between the inner and outer body parts can be realized. For example, the pre-stretcher may have been manufactured using 3D printing.

The pre-stretcher may comprise a front surface extending perpendicular to the central axis, and one or more side surfaces connected to the front surface. The outer body part may at least partially define both the front surface and the one or more side surfaces. Additionally or alternatively, the inner body part may extend outwardly from the central axis to at most 80 percent of a distance between the central axis and a respective side surface, more preferably at most 60 percent.

The outer body part may have an upper outer body part and a lower outer body part based on the position of those parts along the central axis. The upper outer body part may be positioned for engaging the polymeric foil first, wherein the second material or material composition can be arranged only in the upper outer body part. Additionally or alternatively, the intermediate channel part can be arranged only in the upper outer body part. A length of the upper outer body part measured along the central axis may be less than or equal to 30 percent, and more preferably less than or equal to 20 percent, of a length of the pre-stretcher measured along the central axis.

The pre-stretcher may have different shapes. For example, the pre-stretcher may have a conical shape. In this case, the outer body part may be ring shaped. Alternatively, the pre-stretcher may have a box shape, a bar shape, or a trapezoidal prism shape. In this latter case, the outer body part may have at least three foil facing corner regions, and intermediate regions connecting the at least three foil facing corner regions. The second material or material composition may be arranged only in the corner regions. Alternatively, the second material or material composition may be arranged only in the intermediate regions.

The pre-stretcher may comprise a coupling member for allowing the pre-stretcher to be coupled to a shaft or plate of the thermoforming device. This coupling member is typically arranged on the central axis.

According to a second aspect, the present invention provides a pre-stretcher system that comprises a pre-stretcher as described above having the inlet channel part, the outlet channel part, and the intermediate channel part. According to the second aspect, the pre-stretcher system further comprises a source of cooling/heating fluid that is connected to the inlet channel part for generating a flow of the cooling/heating fluid from the inlet channel part, through the intermediate channel part, to the outlet channel part. Such system may be an open system in the sense that the cooling/heating fluid such as pressurized gas is released from the outlet channel part to the environment after having passed through the intermediate channel part. Alternatively, the source, inlet channel panel part, intermediate channel, and outlet channel part may form a closed system. To generate the flow of cooling/heating fluid, the pre-stretcher system may comprise a pump.

According to a third aspect, the present invention provides a thermoforming device comprising the abovementioned pre-stretcher or pre-stretcher system.

Next, the invention will be described in more detail referring to the appended figures, wherein:

> Figures 1 and 2 illustrate an example of a known thermoforming device;
> Figure 3 illustrates a product using the thermoforming device of figure 1;
> Figures 4A and 4B illustrate an embodiment of the pre-stretcher in accordance with the present invention having a conical shape in which different materials are used;
> Figures 5A and 5B illustrate an embodiment of the pre-stretcher in accordance with the present invention having a bar shape in which different materials and a fluid channel are used, respectively; and Figure 6 illustrates a pre-stretcher system in accordance with the present invention.

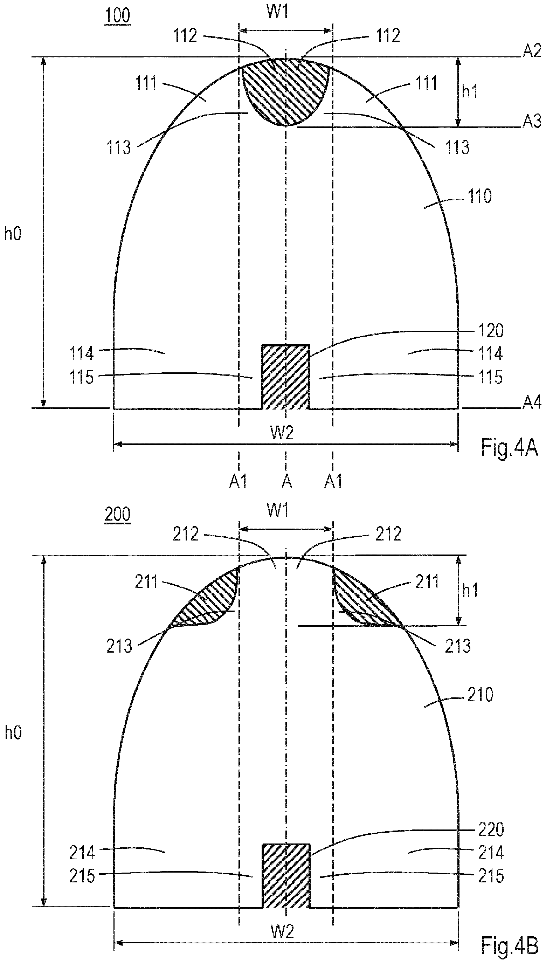

Figures 4A and 4B illustrate an embodiment of a conical pre-stretcher in accordance with the present invention. These embodiments have cylindrical symmetry relative to central axis A. In figure 4A, a pre-stretcher 100 is shown having a body 110 and a coupling member 120 for mounting pre-stretcher 100 to a pre-stretcher shaft of a thermoforming apparatus. Coupling member 120 may be configured as a threaded hole.

Body 110 comprises different regions made of different materials. A distinction can be made between an outer body part, which extends outwardly beyond lines A1 and an inner body part extending from the central axis to lines A1. In addition, a distinction can be made between an upper outer body part, extending from the top of pre-stretcher 100, indicated by line A2, down towards line A3, and a lower outer body part, extending between lines A3 and A4. A similar distinction can be made between an upper inner body part and a lower inner body part.

The upper inner body part comprises a first region 112 that is made of a second material or material composition, and a second region 113 that is made of a first material or material composition. The upper outer body part comprises a region 111 that is made of the first material or material composition. The lower inner body part comprises a region 115 and the lower outer body part a region 114, which are both made of the first material or material composition.

When the second material or material composition of which region 112 is made has a higher coefficient of thermal conductivity compared to the first material or material composition, a product may be obtained of which the bottom is shaped using a pre-stretcher region that is able to more quickly transport the heat from the heated polymeric material than other regions of the pre-stretcher. In such an embodiment, the bottom of the product will be stretched less easily and may assume a partial solid form more quickly than other parts of the product. This may result in a thicker bottom wall of the product. Similar arguments hold if the coefficient of friction of the second material or material composition relative to the polymeric material is higher than the coefficient of friction of the first material or material composition relative to the polymeric material.

Figure 4B shows an opposite embodiment of a pre-stretcher. In figure 4B, a conically shaped pre-stretcher 200 is shown having a body 210 and a coupling member 220 for mounting pre-stretcher 200 to a pre-stretcher shaft of a thermoforming apparatus. Also here, coupling member 220 may be configured as a threaded hole.

Compared to figure 4A, a similar distinction can be made between an inner and outer body part, between an upper and lower outer body part, and between an upper and lower inner body part. However, in this embodiment, upper inner body part comprises a region 212 that is made of a first material or material composition. The upper outer body part comprises a first region 211 that is made of a second material or material composition, and a third region 213 that is made of the first material or material composition. The lower inner body part comprises a region 215 and the lower outer body part a region 214, which are both made of the first material or material composition.

When the second material or material composition of which region 211 is made has a higher coefficient of thermal conductivity compared to the first material or material composition, a product may be obtained of which the corner regions or the regions connecting the side walls to the bottom of the product can be shaped using a pre-stretcher region that is able to more quickly transport the heat from the heated polymeric material than other regions of the pre-stretcher. In such an embodiment, the corner regions of the product will be stretched less easily and may assume a partial solid form more quickly than other parts of the product. This may result in products having thicker corner regions. Similar arguments hold if the coefficient of friction of the second material or material composition relative to the polymeric material is higher than the coefficient of friction of the first material or material composition relative to the polymeric material.

In figures 4A and 4B, parameters h0, h1, w1, and w2 are shown for indicating the height of the entire pre-stretcher, the height of the upper body part, the width of the inner body part, and the width of the entire pre-stretcher, respectively. Typical values for these parameters are:

$$50 \text{ mm} < h0 < 200 \text{ mm}$$

$$5 \text{ mm} < h1 < 20 \text{ mm}$$

$$20 \text{ mm} < w1 < 170 \text{ mm}$$

$$50 \text{ mm} < w2 < 200 \text{ mm}$$

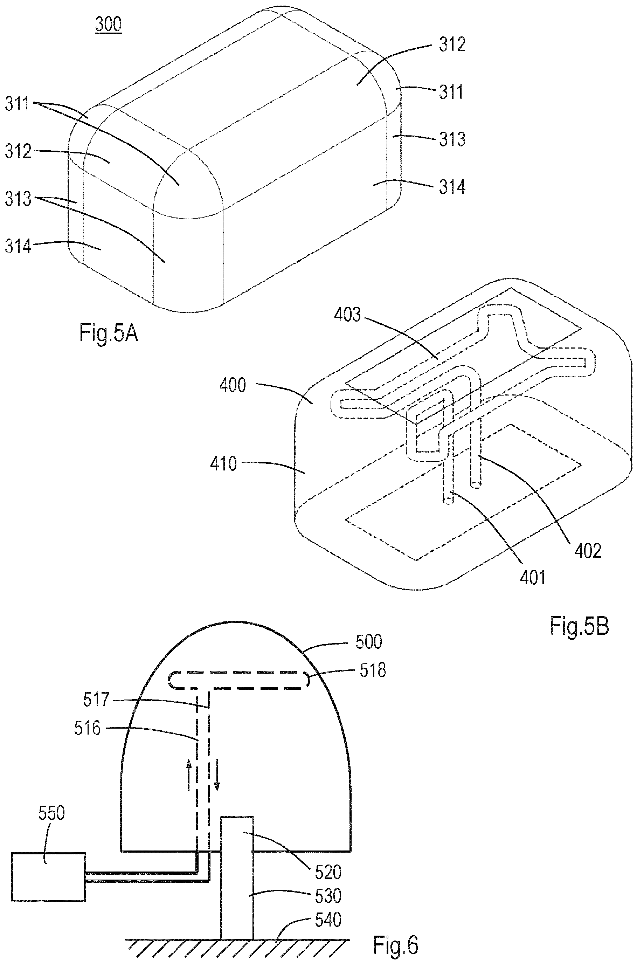

Figures 5A illustrates an embodiment of pre-stretcher 300 having a bar shape in which different materials are used. As figure 5A is a perspective view, only outer body parts are visible. The upper outer body part comprises four foil facing corner regions 311 that are connected to each other using intermediate regions 312. Foil facing corner regions 311 are made of a second material or material composition whereas the intermediate regions 312 are made of a first material or material composition having a different coefficient of thermal conductivity and/or friction. The lower outer body part comprises regions 313, 314 that are all made of the first material or material composition. The same holds for the inner body parts that cannot be seen in figure 5A.

When the second material or material composition of which regions 311 are made has a higher coefficient of thermal conductivity compared to the first material or material composition, a product may be obtained of which the corner regions of the product can be shaped using a pre-stretcher region that is able to more quickly transport the heat from the heated polymeric material than other regions of the pre-stretcher. In such an embodiment, the corner regions of the product will be stretched less easily and may assume a partial solid form more quickly than other parts of the product. This may result in products having thicker corner regions. Similar arguments hold if the coefficient of friction of the second material or material composition relative to the polymeric material is higher than the coefficient of friction of the first material or material composition relative to the polymeric material.

Figures 5B illustrates an embodiment of a pre-stretcher 400 in which a fluid channel is used. This fluid channel comprises an inlet channel part 401, and an outlet channel part 402. As can be seen in figure 5B, channel parts 401, 402 extend substantially parallel to a central axis of pre-stretcher 400. Moreover, intermediate channel part 403 extends in the upper part of body 410.

A fluid flow can be generated through the fluid channel for the purpose of heating or cooling regions of pre-stretcher 400. As can be seen in figure 5B, intermediate channel part 403 extends in the corner regions of pre-stretcher 400. Consequently, when a coolant is fed through the fluid channel, a similar situation is obtained as with pre-stretcher 300 shown in figure 5A.

Typically, intermediate channel part 403 will extend in a plane perpendicular to the central axis and may display some form or rotational symmetry to achieve similar cooling or heating in the corners or alongside the entire region of the pre-stretcher that defines that part of the product that connects the bottom to the sidewall(s).

Figure 6 illustrates a pre-stretcher system comprising a conical pre-stretcher 500 having a fluid channel with an inlet channel part 516, an outlet channel part 517 and a ring shaped intermediate channel part 518. Using coupling member 520, pre-stretcher 500 is coupled to a pre-stretcher shaft 530. This latter shaft is coupled to a plate 540 of the thermoforming apparatus. Typically, plate 540 is connected to a plurality of pre-stretchers 500.

The fluid channel is connected to a source 550 to form a closed circuit. In this circuit, a flow of fluid, such as compressed gas or a suitable coolant, is generated. To that end, source 550 may be provided with a pump. The connections between 550 and pre-stretcher 500 are generally flexible to accommodate for the movement of pre-stretcher 500.

When generating a flow of coolant in the fluid channel, a similar situation is obtained as with pre-stretcher 200 shown in figure 4B. However, when a flow of a heating fluid is generated, a situation is obtained as with pre-stretcher 100 shown in figure 4A.

In the embodiments described above, the first material and/or second material may be syntactic foam. This foam can be composed of hollow microspheres, such as hollow glass microspheres, and a binding agent for binding the hollow microspheres. The binding agent can be one or more out of the group consisting of polyether ether ketone 'PEEK', polyether ketone ketone 'PEKK', polyaryle ether ketones 'PEK, polyetherimide 'PEI', and Polyamide 'PA'. Other binding agents or other essentially hollow microspheres are not excluded. Differences in the coefficient of thermal conductivity and/or the coefficient of friction between the first and second materials or material compositions can be achieved by varying the binding agent and/or the amount of the hollow microspheres.

The embodiments of the present invention illustrate that by using materials having a different coefficient of thermal conductivity and/or friction, the stretching properties of the heated polymeric material can be controlled and/or affected, thereby allowing better control of the wall thickness of the final product.

Although the embodiments discussed above either comprise a fluid channel or different materials, the present invention does not exclude embodiments in which both are used. Moreover, although the present invention has been described using detailed embodiments thereof, the scope of the invention should not be limited to these embodiments. Instead, the scope of the invention is defined by the appended claims and their equivalents.

## Claims

1. A pre-stretcher (100; 200; 300; 400; 500) for a thermoforming device and configured for pre-stretching a polymeric material by moving along a first direction relative to the polymeric material, the pre-stretcher comprising:

   a body (110) having a central axis parallel to the first direction, wherein the body is divided into an inner body part and an outer body part based on a position of those parts relative to the central axis;
   wherein the inner body part is made at least partially from a first material or material composition having a first coefficient of thermal conductivity and a first coefficient of friction relative to the polymeric material;
   wherein the outer body part is made at least partially from a second material or material composition having a second coefficient of thermal conductivity and a second coefficient of friction relative to the polymeric material being different from the first coefficient of thermal conductivity and/or the first coefficient of friction, respectively;

**characterized in that** the first material and second material are syntactic foam, wherein the syntactic foam is composed of hollow microspheres and a binding agent for binding the hollow microspheres;

wherein the first and second material have a different coefficient of thermal conductivity and/or friction due to the amount of microspheres, the size and/or thickness of the microspheres, and/or the type of binding agent used in the first and second material being different.

2. The pre-stretcher according to claim 1, wherein the binding agents of the syntactic foams of the first material and second material are identical.

3. The pre-stretcher according to claim 1 or 2, wherein the inner body part is entirely made of the first material or material composition, and wherein the outer body part comprises a first region made of the first material or material composition and a second region made of the second material or material composition.

4. The pre-stretcher according to claim 1 or 2, wherein the outer body part is entirely made of the first material or material composition, and wherein the inner body part comprises a first region made of the first material or material composition and a second region made of the second material or material composition.

5. The pre-stretcher according to any of the previous claims, wherein the hollow microspheres are glass microspheres, and/or wherein the binding agent is one or more out of the group consisting of polyether ether ketone 'PEEK', polyether ketone ketone 'PEKK', polyaryle ether ketones 'PEK, Polyamide 'PA', and polyetherimide 'PEI'.

6. The pre-stretcher according to any of the previous claims, wherein the pre-stretcher has been manufactured using 3D printing.

7. The pre-stretcher according to any of the previous claims, wherein the pre-stretcher comprises a front surface extending perpendicular to the central axis, and one or more side surfaces connected to the front surface;

wherein the outer body part preferably at least partially defines both the front surface and the one or more side surfaces, and/or wherein the inner body part preferably extends outwardly from the central axis to at most 80 percent of a distance between the central axis and a respective side surface, more preferably at most 60 percent.

8. The pre-stretcher according to any of the previous claims, wherein the outer body part has an upper outer body part and a lower outer body part based on the position of those parts along the central axis, the upper outer body part being positioned for engaging the polymeric foil first, wherein the second material or material composition is only arranged in the upper outer body part and/or wherein said intermediate channel part is only arranged in the upper outer body part;

wherein a length of the upper outer body part measured along the central axis is preferably less than or equal to 30 percent, and more preferably less than or equal to 20 percent, of a length of the pre-stretcher measured along the central axis.

9. The pre-stretcher according to any of the previous claims, wherein the pre-stretcher (100; 200; 500) has a conical shape, wherein the outer body part is preferably ring shaped.

10. The pre-stretcher according to any of the claims 1-8, wherein the pre-stretcher (300; 400) has a box shape, a bar shape, or a trapezoidal prism shape.

11. The pre-stretcher according to claim 10 and 3, wherein the outer body part has at least three foil facing corner regions (311), and intermediate regions (312) connecting the at least three foil facing corner regions, wherein the second material or material composition is arranged only in the corner regions, or wherein the second material or material composition is arranged only in the intermediate regions.

12. The pre-stretcher according to any of the previous claims, wherein the pre-stretcher comprises a coupling member (120; 520) for allowing the pre-stretcher to be coupled to a shaft (530) or plate (540) of the thermoforming device.

13. A pre-stretcher system, comprising:

the pre-stretcher (400; 500) according to any of the previous claims, wherein the pre-stretcher (400; 500) further comprises a fluid channel having an inlet channel part (401; 516), an outlet channel part (402; 517), and an intermediate channel part (403; 518), wherein the inlet channel part and outlet channel part each extend along the first direction, the intermediate channel part being arranged at least partially in the outer body part, and wherein the intermediate channel part preferably extends for the most part in a plane perpendicular to the first direction;

a source (550) of cooling/heating fluid being connected to the inlet channel part for generating a flow of said cooling/heating fluid from the inlet channel part, through the intermediate channel part, to the outlet channel part.

14. The pre-stretcher system according to claim 13, wherein said source, inlet channel panel part, intermediate channel, and outlet channel part form a closed system, preferably comprising a pump for generating said flow of said cooling/heating fluid.

15. A thermoforming device comprising the pre-stretcher of any of the claims 1-12, or the pre-stretcher system of claim 13 or 14.

**Patentansprüche**

1. Ein Vorstrecker (100; 200; 300; 400; 500) für eine Thermoformvorrichtung und ausgelegt zum Vorstrecken eines polymeren Materials durch Bewegung entlang einer ersten Richtung relativ zu dem polymeren Material, der Vorstrecker aufweisend:

   einen Körper (110) mit einer Mittelachse parallel zur ersten Richtung, wobei der Körper in einen inneren Teil des Körpers und einen äußeren Teil des Körpers unterteilt ist, basierend auf einer Position dieser Teile relativ zu der Mittelachse; wobei der innere Teil des Körpers zumindest teilweise aus einem ersten Material oder einer ersten Materialzusammensetzung mit einem ersten Wärmeleitfähigkeitskoeffizienten und einem ersten Reibungskoeffizienten in Bezug auf das polymere Material hergestellt ist; wobei der äußere Teil des Körpers zumindest teilweise aus einem zweiten Material oder einer zweiten Materialzusammensetzung mit einem zweiten Wärmeleitfähigkeitskoeffizienten und einem zweiten Reibungskoeffizienten in Bezug auf das polymere Material hergestellt ist, die sich jeweils von dem ersten Wärmeleitfähigkeitskoeffizienten und/oder dem ersten Reibungskoeffizienten unterscheiden; **dadurch gekennzeichnet, dass** das erste Material und das zweite Material syntaktischer Schaum sind, wobei der syntaktische Schaum aus hohlen Mikrokugeln und einem Bindemittel zum Binden der hohlen Mikrokugeln besteht; wobei das erste und das zweite Material einen unterschiedlichen Wärmeleitfähigkeits- und/oder Reibungskoeffizienten aufgrund der unterschiedlichen Menge an Mikrokugeln, der Größe und/oder Dicke der Mikrokugeln und/oder der Art des im ersten und zweiten Material verwendeten Bindemittels aufweisen.

2. Der Vorstrecker nach Anspruch 1, wobei die Bindemittel der syntaktischen Schaumstoffe des ersten Materials und des zweiten Materials identisch sind.

3. Der Vorstrecker nach Anspruch 1 oder 2, wobei der innere Teil des Körpers vollständig aus dem ersten Material oder der ersten Materialzusammensetzung besteht, und wobei der äußere Teil des Körpers einen ersten Bereich aus dem ersten Material oder der ersten Materialzusammensetzung und einen zweiten Bereich aus dem zweiten Material oder der zweiten Materialzusammensetzung aufweist.

4. Der Vorstrecker nach Anspruch 1 oder 2, wobei der äußere Teil des Körpers vollständig aus dem ersten Material oder der ersten Materialzusammensetzung hergestellt ist und wobei der innere Teil des Körpers einen ersten Bereich aus dem ersten Material oder der ersten Materialzusammensetzung und einen zweiten Bereich aus dem zweiten Material oder der zweiten Materialzusammensetzung aufweist.

5. Der Vorstrecker nach einem der vorhergehenden Ansprüche, wobei die hohlen Mikrokugeln Mikrokugeln aus Glas sind und/oder wobei das Bindemittel eines oder mehrere aus der Gruppe umfassend Polyetheretherketon "PEEK", Polyetherketonketon "PEKK", Polyaryletherketone "PEK", Polyamid "PA" und Polyetherimid "PEI" ist.

6. Der Vorstrecker nach einem der vorhergehenden Ansprüche, wobei der Vorstrecker mittels 3D-Druck hergestellt wurde.

7. Der Vorstrecker nach einem der vorhergehenden Ansprüche, wobei der Vorstrecker eine Vorderfläche, die sich senkrecht zur Mittelachse erstreckt, und eine oder mehrere Seitenflächen, die mit der Vorderfläche verbunden sind, aufweist; wobei der äußere Teil des Körpers vorzugsweise zumindest teilweise sowohl die Vorderfläche als auch die eine oder die mehreren Seitenflächen bildet, und/oder wobei der innere Teil des Körpers sich vorzugsweise von der Mittelachse bis zu höchstens 80 Prozent eines Abstands zwischen der Mittelachse und einer entsprechenden Seitenfläche nach außen erstreckt, besonders bevorzugt bis zu höchstens 60 Prozent.

8. Der Vorstrecker nach einem der vorhergehenden Ansprüche, wobei das äußere Teil des Körpers ein oberes äußeres Teil des Körpers und ein unteres äußeres Teil des Körpers aufweist, wobei basierend auf der Position dieser Teile entlang der Mittelachse das obere äußere Teil des Körpers so angeordnet ist, dass es zuerst mit der Polymerfolie in Eingriff kommt, wobei das zweite Material oder die zweite Materialzusammensetzung nur in dem oberen äußeren Teil des Körpers angeordnet ist und/oder wobei das Zwischenkanalteil nur in dem oberen äußeren Teil des Körpers angeordnet ist; wobei eine Länge des oberen äußeren Körperteils, gemessen entlang der Mittelachse, bevorzugt weniger als oder gleich 30 Prozent und besonders bevorzugt weniger als oder gleich 20 Prozent einer Länge des Vorstreckers, gemessen entlang der Mittelachse, beträgt.

9. Der Vorstrecker nach einem der vorhergehenden Ansprüche, wobei der Vorstrecker (100; 200; 500) eine konische Form aufweist, wobei der äußere Teil des Körpers bevorzugt ringförmig ist.

10. Der Vorstrecker nach einem der Ansprüche 1-8, wobei der Vorstrecker (300; 400) eine Kastenform, eine Stabform oder eine trapezförmige Prismenform aufweist.

11. Der Vorstrecker nach Anspruch 10 und 3, wobei der äußere Teil des Körpers zumindest drei der Folie zugewandte Eckbereiche (311) und Zwischenbereiche (312) aufweist, die die zumindest drei der Folie zugewandten Eckbereiche verbinden, wobei das zweite Material oder die Materialzusammensetzung nur in den Eckbereichen angeordnet ist, oder wobei das zweite Material oder die Materialzusammensetzung nur in den Zwischenbereichen angeordnet ist.

12. Der Vorstrecker nach einem der vorhergehenden Ansprüche, wobei der Vorstrecker ein Koppelelement (120; 520) aufweist, das die Kopplung des Vorstreckers mit einer Welle (530) oder Platte (540) der Thermoformvorrichtung ermöglicht.

13. Ein Vorstreckersystem, aufweisend:

den Vorstrecker (400; 500) nach einem der vorhergehenden Ansprüche, wobei der Vorstrecker (400, 500) einen Fluidkanal mit einem Einlasskanalteil (401; 516), einem Auslasskanalteil (402; 517) und einem Zwischenkanalteil (403; 518) aufweist, wobei sich der Einlasskanalteil und der Auslasskanalteil jeweils entlang der ersten Richtung erstrecken, wobei der Zwischenkanalteil zumindest teilweise in dem äußeren Teil des Körpers angeordnet ist, und wobei sich der Zwischenkanalteil bevorzugt zum größten Teil in einer Ebene senkrecht zu der ersten Richtung erstreckt; eine Quelle (550) für Kühl-/Heizflüssigkeit, die mit dem Einlasskanalteil verbunden ist, um eine Strömung der Kühl-/Heizflüssigkeit von dem Einlasskanalteil durch den Zwischenkanalteil zu dem Auslasskanalteil zu erzeugen.

14. Das Vorstrecksystem nach Anspruch 13, wobei die Quelle, das Einlasskanal-Paneelteil, der Zwischenkanal und das Auslasskanalteil ein geschlossenes System bilden, das vorzugsweise eine Pumpe zur Erzeugung des Stroms der Kühl-/Heizflüssigkeit aufweist.

15. Eine Thermoformvorrichtung, die den Vorstrecker nach einem der Ansprüche 1-12 oder das Vorstreckersystem nach Anspruch 13 oder 14 aufweist.

## Revendications

1. Pré-étireur (100 ; 200 ; 300 ; 400 ; 500) pour un dispositif de thermoformage et configuré pour pré-étirer un matériau polymère en se déplaçant le long d'une première direction par rapport au matériau polymère, le pré-étireur comprenant :

un corps (110) ayant un axe central parallèle à la première direction, dans lequel le corps est divisé en une partie de corps interne et une partie de corps externe sur la base d'une position de ces parties par rapport à l'axe central ; dans lequel la partie de corps interne est composée au moins partiellement d'un premier matériau ou d'une première composition de matériau ayant un premier coefficient de conductivité thermique et un premier coefficient de friction par rapport au matériau polymère ; dans lequel la partie de corps externe est composée au moins partiellement d'un second matériau ou d'une seconde composition de matériau ayant un second coefficient de conductivité thermique et un second coefficient de friction par rapport au matériau polymère qui est différent du premier coefficient de conductivité thermique et/ou du premier coefficient de friction, respectivement ; **caractérisé en ce que** le premier matériau et le second matériau sont une mousse syntactique, dans lequel la mousse syntactique est composée de microsphères creuses et d'un agent de liaison pour lier les microsphères creuses ; dans lequel les premier et second matériaux ont un coefficient de conductivité thermique et/ou de friction différent en raison de la quantité de microsphères, de la taille et/ou de l'épaisseur des microsphères, et/ou du type d'agent de liaison utilisé dans les premier et second matériaux qui sont différents.

2. Pré-étireur selon la revendication 1, dans lequel les agents de liaison des mousses syntactiques du premier matériau et du second matériau sont identiques.

3. Pré-étireur selon la revendication 1 ou 2, dans lequel la partie de corps interne est entièrement composée du premier matériau ou de la première composition de matériau, et dans lequel la partie de corps externe comprend une première région composée du premier matériau ou de la première composition de matériau et une seconde région composée du second matériau ou de la seconde composition de matériau.

4. Pré-étireur selon la revendication 1 ou 2, dans lequel la partie de corps externe est entièrement composée du premier matériau ou de la première composition de matériau, et dans lequel la partie de corps interne comprend une première région composée du premier matériau ou de la première composition de matériau et une seconde région composée du second matériau ou de la seconde composition de matériau.

5. Pré-étireur selon l'une quelconque des revendications précédentes, dans lequel les microsphères creuses sont des microsphères de verre, et/ou dans lequel l'agent de liaison est l'un ou plusieurs parmi le groupe constitué de poly(étheréthercétone) « PEEK », de poly(éthercétonecétone) « PEKK », de poly(aryleéthercétones) « PEK », de polyamide « PA » et de polyétherimide « PEI ».

6. Pré-étireur selon l'une quelconque des revendications précédentes, dans lequel le pré-étireur a été fabriqué au moyen d'une impression 3D.

7. Pré-étireur selon l'une quelconque des revendications précédentes, dans lequel le pré-étireur comprend une surface avant s'étendant perpendiculairement à l'axe central, et une ou plusieurs surfaces latérales reliées à la surface avant ;
dans lequel la partie de corps externe définit de préférence au moins partiellement à la fois la surface avant et la ou les surfaces latérales, et/ou dans lequel la partie de corps interne s'étend de préférence vers l'extérieur à partir de l'axe central sur au plus 80 pourcents d'une distance entre l'axe central et une surface latérale respective, de manière davantage préférée d'au plus 60 pourcents.

8. Pré-étireur selon l'une quelconque des revendications précédentes, dans lequel la partie de corps externe a une partie de corps externe supérieure et une partie de corps externe inférieure sur la base de la position de ces parties le long de l'axe central, la partie de corps externe supérieure étant positionnée pour mettre en prise la feuille polymère d'abord, dans lequel le second matériau ou la seconde composition de matériau est uniquement agencé(e) dans la partie de corps externe supérieure et/ou dans lequel ladite partie de canal intermédiaire est uniquement agencée dans la partie de corps externe supérieure ;
dans lequel une longueur de la partie de corps externe supérieure mesurée le long de l'axe central est de préférence inférieure ou égale à 30 pourcents, et de manière davantage préférée inférieure ou égale à 20 pourcents, d'une longueur du pré-étireur mesurée le long de l'axe central.

9. Pré-étireur selon l'une quelconque des revendications précédentes, dans lequel le pré-étireur (100 ; 200 ; 500) a une forme conique, dans lequel la partie de corps externe est de préférence annulaire.

10. Pré-étireur selon l'une quelconque des revendications 1-8, dans lequel le pré-étireur (300 ; 400) présente une forme de boîte, une forme de barre, ou une forme de prisme trapézoïdal.

11. Pré-étireur selon les revendications 10 et 3, dans lequel la partie de corps externe a au moins trois régions de coin dirigées vers la feuille (311), et des régions intermédiaires (312) reliant les au moins trois régions de coin dirigées vers la feuille, dans lequel le second matériau ou la seconde composition de matériau est agencé(e) uniquement dans les régions de coin, ou dans lequel le second matériau ou la seconde composition de matériau est agencé(e) uniquement dans les régions intermédiaires.

12. Pré-étireur selon l'une quelconque des revendications précédentes, dans lequel le pré-étireur comprend un élément d'accouplement (120 ; 520) pour permettre au pré-étireur d'être accouplé à un arbre (530) ou à une plaque (540) du dispositif de thermoformage.

13. Système de pré-étireur, comprenant :

le pré-étireur (400 ; 500) selon l'une quelconque des revendications précédentes, dans lequel le pré-étireur (400 ; 500) comprend en outre un canal de fluide ayant une partie de canal d'entrée (401 ; 516), une partie de canal de sortie (402 ; 517), et une partie de canal intermédiaire (403 ; 518), dans lequel la partie de canal d'entrée et la partie de canal de sortie s'étendent chacune le long de la première direction, la partie de canal intermédiaire étant agencée au moins partiellement dans la partie de corps externe, et dans lequel la partie de canal intermédiaire s'étend de préférence pour la majeure partie dans un plan perpendiculaire à la première direction ;
une source (550) de fluide de refroidissement/chauffage étant reliée à la partie de canal d'entrée pour générer un écoulement dudit fluide de refroidissement/chauffage à partir de la partie de canal d'entrée, à travers la partie de canal intermédiaire, vers la partie de canal de sortie.

14. Pré-étireur selon la revendication 13, dans lequel ladite source, ladite partie de panneau de canal d'entrée, ledit canal intermédiaire, et ladite partie de canal de sortie forment un système fermé, de préférence comprenant une pompe pour générer ledit écoulement dudit fluide de refroidissement/chauffage.

**15.** Dispositif de thermoformage comprenant le pré-étireur selon l'une quelconque des revendications 1-12, ou le système de pré-étireur selon la revendication 13 ou 14.

Fig.1

Fig.2

Fig.3

Fig.4A

Fig.4B

_300_

311
312
313
314

312
311
313
314

Fig.5A

403

400

410

401
402

Fig.5B

500
518
517
516
550
520
530
540

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4595554 A
- JP 2001205694 A
- DE 2428578 A1